## Europäisches Patentamt

## European Patent Office

## Office européen des brevets

(11) Veröffentlichungsnummer: **0 503 452 A2**

# EUROPÄISCHE PATENTANMELDUNG

(21) Anmeldenummer: **92103662.0**

(22) Anmeldetag: **04.03.92**

(51) Int. Cl.$^5$: **G01C 19/66**

(30) Priorität: **12.03.91 DE 4107915**

(43) Veröffentlichungstag der Anmeldung:
**16.09.92 Patentblatt 92/38**

(84) Benannte Vertragsstaaten:
**DE FR GB**

(71) Anmelder: **Bodenseewerk Gerätetechnik GmbH**
**Alte Nussdorfer Strasse 15 Postfach 1120**
**W-7770 Überlingen/Bodensee(DE)**

(72) Erfinder: **Bernard, Walter, Dr.**
**Säntisblick 17**
**W-7758 Daisendorf(DE)**
Erfinder: **Geister, Götz**
**Bahnhofstrasse 88**
**W-7777 Salem-Mimmenhausen(DE)**
Erfinder: **Raab, Michael**
**Weildorfer Hardt 9**
**W-7777 Salem 1(DE)**

(74) Vertreter: **Weisse, Jürgen, Dipl.-Phys. et al**
**Patentanwälte Dipl.-Phys. Jürgen Weisse**
**Dipl.-Chem. Dr. Rudolf Wolgast Bökenbusch**
**41 Postfach 11 03 86**
**W-5620 Velbert 11 Langenberg(DE)**

(54) **Ringlasersensor.**

(57) Ein Sensor für eine Meßgröße enthält einen optischen Ringresonator mit einem ersten und einem zweiten Umlaufsinn des Lichtes, wobei die optischen Weglängen des Ringresonators für den ersten und den zweiten Umlaufsinn des Lichts in dem Ringresonator durch einen nichtreziproken Effekt in Abhängigkeit von der Meßgröße unterschiedlich verändert werden. Ein Halbleiterlaser ist mit dem Ringresonator zur Erzeugung einer mit dem ersten Umlaufsinn umlaufenden Lichtwelle und einer mit dem zweiten Umlaufsinn umlaufenden Lichtwelle gekoppelt, wobei der Ringresonator einen Teil des Resonanzhohlraumes des Halbleiterlasers bildet. Die Frequenz des Halbleiterlasers wird durch unmittelbare Ansteuerung des Halbleiterlasers moduliert, derart, daß Seitenbänder der frequenzmodulierten Laserlichtwelle mit dem Ringresonator in Resonanz sind. Eine Detektoreinrichtung spricht auf die Unterschiede der mit dem ersten und dem zweiten Umlaufsinn umlaufenden Lichtwellen an und erzeugt ein die Meßgröße wiedergebendes Signal.

FIG.1

Die Erfindung betrifft einen Sensor für eine Meßgröße.

Insbesondere betrifft die Erfindung einen Sensor, der darauf beruht, daß die Meßgröße nichtreziproke Effekte an einem Ringresonator hervorruft. Solche nichtreziproke Effekte sind beispielsweise der Sagnac-Effekt oder der Faraday-Effekt. Der Sagnac-Effekt wird beispielsweise zur Herstellung von "Laserkreiseln" ausgenutzt.

Durch die DE-OS 37 12 815 oder die (im wesentlichen inhaltsgleiche) EP-PS O 290 723 ist eine Meßvorrichtung für Drehgeschwindigkeiten unter Ausnutzung des Sagnac-Effektes bekannt, die einen Ringresonator und einen Laser enthält. Der Ringresonator bildet dabei einen Teil des Resonanzhohlraumes des Lasers. Dadurch brauchen keine Vorkehrungen zur Erzielung einer optischen Isolation zwischen Laser und Ringresonator vorgesehen zu werden. Als Laser dient ein Halbleiterlaser. Es werden dort verschiedene Ausführungen des Ringresonators mit Spiegeln, integrierter Optik oder Faseroptik beschrieben. Dort erfolgt eine Phasenmodulation des Lasers durch periodische Veränderung des den Ringresonator enthaltenden Lichtweges. Der Lichtweg wird so eingeregelt, daß die Frequenz des Laserlichtes mit der Resonanzfrequenz des Ringresonators für einen Umlaufsinn des Lichtes übereinstimmt. Die Ableitung der Intensität des mit dem anderen Umlaufsinn umlaufenden Lichtes nach der Phase, praktisch die Wechselstromkomponente des modulierten Lichtes, liefert dann ein Maß für die Drehrate. Es wird in der DE-OS 37 12 815 auch vorgeschlagen, den Laser direkt über die Steuerung seines Injektionsstromes zu modulieren. In der Praxis ergibt sich dabei aber die Schwierigkeit, daß die Modulierbarkeit des Lasers durch die Rückkopplung des Lichtes von dem externen Oszillator verringert wird.

In einem Aufsatz von Carroll, Coccoli, Cardarelli und Coate "The Passive Resonator Fiber Optic Gyro and Comparison to the Interferometer Fiber Gyro" in "SPIE Vol.719 Fiber Optic Gyros: 10th Anniversary Conference (1986), 169-177 ist ein Faserkreisel mit einem passiven Ringresonator beschrieben. Das Licht des Lasers wird durch einen Phasenmodulator zur Erzeugung von Seitenbändern moduliert und in zwei Faserzweige geleitet. In jedem der beiden Faserzweige sitzt ein akustooptischer Frequenzschieber. Aus den beiden faserzweigen wird das Licht mit entgegengesetzten Umlaufrichtungen in einen Faserring eingekoppelt. Entsprechend wird Licht, das den Faserring mit der einen oder der anderen Umlaufrichtung durchlaufen hat, durch Koppler ausgekoppelt und auf photoelektrische Detektoren geleitet. Die Detektorsignale sind auf Signalverarbeitungsmittel aufgeschaltet. Diese steuern einmal die Laserfrequenz und zum anderen einen der Frequenzschieber. Damit wird bei Auftreten einer Drehrate die Frequenz des Laserlichts in Resonanz mit einer Umlaufrichtung des von dem Faserring gebildeten Ringresonators gehalten, während in der anderen Umlaufrichtung eine entsprechende Frequenzverschiebung erfolgt.

Durch einen Aufsatz von Hollberg und Ohtsu "Modulatable narrow-linewidth semiconductor lasers" in Appl. Phys. Lett. 53 (1988), 944-946 ist es bekannt, die Bandbreite eines Halbleiterlasers durch optische Rückkopplung von einem externen Resonanzhohlraum zu verbessern. Es ist dort auch gesagt, daß durch eine solche optische Rückkopplung die Modulierbarkeit des Lasers verringert wird. Es wird dort auch gesagt, daß es bestimmte Modulationsfrequenzen gibt, welche die Frequenzmodulations-Eigenschaften des optisch stabilisierten Halbleiterlasers stark beeinflussen. Bei bestimmten Modulationszuständen können einige oder alle Modulationsseitenbänder mit dem Resonanzhohlraum mit oder ohne Träger in Resonanz sein. In diesem Fall gelangen diese Seitenbänder zu dem Halbleiterlaser zurück und verstärken die optische Stabilisierung des Halbleiterlasers. Das gilt insbesondere für den freien Spektralabstand des Resonanzhohlraumes oder dessen Harmonische. Auf diese Weise ist es möglich, den Laserstrom mit einem hohen Modulationsindex zu modulieren und viele Seitenbänder zu erzeugen, ohne die Frequenzstabilisierung und die Einengung der Linienbreite zu stören, die durch die optische Rückkopplung erreicht wird.

In einem Aufsatz von Laurent, Clairon und Bréant "Frequency Noise Analysis of Optically Self-Locked Diode Lasers" in "Journal of Quantum Electronics" Bd.25 (1989), 1131-1142 wird dargestellt, wie sich die Frequenz eines optisch rückgekoppelten Halbleiterlasers in Abhängigkeit von der Frequenz des "ungestörten" Halbleiterlasers ändert und zeigt die starke Reduzierung der Modulationsfähigkeit.

In einem Aufsatz von DeVoe und Brewer "Laser-frequency division and stabilization" in "Physical Review A" Bd. 30 (1984), 2987-2889 ist eine Anordnung dargestellt, bei welcher ein Laser durch einen Regelkreis auf eine höhere Ordnung eines Referenzhohlraumes abgestimmt wird. Der Referenzhohlraum wird durch einen zweiten Regelkreis auf eine Hochfrequenz abgestimmt. Dadurch kann der Laser mittels der Hochfrequenz stabilisiert werden.

Der Erfindung liegt die Aufgabe zugrunde, einen verbesserten Sensor für nichtreziproke Effekte in Ringresonatoren zu schaffen.

Erfindungsgemäß wird diese Aufgabe durch einen Sensor gelöst mit den folgenden Merkmalen:

(a) einem optischen Ringresonator mit einem ersten und einem zweiten Umlaufsinn des Lichtes, wobei die optischen Weglängen des Ringresonators für den ersten und den zweiten Umlaufsinn des Lichts in dem Ringresonator durch einen nichtreziproken Effekt in Abhängigkeit von der Meßgröße unterschiedlich verändert werden,

(b) einen Halbleiterlaser, der mit dem Ringresonator zur Erzeugung einer mit dem ersten Umlaufsinn umlaufenden Lichtwelle und einer mit dem zweiten Umlaufsinn umlaufenden Lichtwelle gekoppelt ist, wobei der Ringresonator einen Teil des Resonanzhohlraumes des Halbleiterlasers bildet,

(c) Mittel zur Modulation der Frequenz des Halbleiterlasers durch direkte Ansteuerung des Halbleiterlasers, derart, daß Seitenbänder der frequenzmodulierten Laserlichtwelle mit dem Ringresonator in Resonanz sind, und

(d) eine Detektoreinrichtung, welche auf die Unterschiede der mit dem ersten und dem zweiten Umlaufsinn umlaufenden Lichtwellen anspricht zur Erzeugung eines die besagte Meßgröße wiedergebenden Signals.

Durch die Erfindung wird ein integrierter Sensor geschaffen. Ein Halbleiterlaser wird durch einen externen Resonanzhohlraum stabilisiert. Durch die optische Rückkopplung wird der Halbleiterlaser schmalbandig. Der so optisch rückgekoppelte Halbleiterlaser wird auf einfache Weise mit einer Hochfrequenz moduliert.

Die Anzahl der Komponenten des Sensors wird dabei minimiert. Jede Komponente erfüllt mehrere Funktionen. Der Halbleiterlaser ist nicht nur Lichtquelle sondern bildet einen Teil des Sensors, dessen Verhalten durch die Meßgröße mit bestimmt wird. Der Ringresonator, der die Frequenz des Halbleiterlasers bestimmt, ist hier gleichzeitig ein Sensorelement für nichtreziproke Effekte, z.B. für den Sagnac-Effekt bei Auftreten von Drehraten. Der Halbleiterlaser ist nicht nur Lichtquelle sondern gleichzeitig Modulator, der zur Erzielung der Frequenzmodulation direkt angesteuert wird.

Bei der Erfindung wird, wie bei der DE-OS 37 12 815, der Ringresonator in Rückkopplung mit dem außerhalb des Ringresonators sitzenden Halbleiterlaser betrieben. Dadurch wird der Halbleiterlaser sehr schmalbandig. Ein optischer Isolator zwischen Halbleiterlaser und Ringresonator ist nicht erforderlich. Andererseits braucht der Halbleiterlaser nicht entspiegelt zu sein. Durch die resonante Rückkopplung der Seitenbänder wird das Problem der reduzierten Frequenzmodulierbarkeit gelöst. Dadurch ist es möglich, den Halbleiterlaser mit geringerem Modulationsindex zu modulieren. Das bringt wieder eine Verminderung des störenden Amplitudenmodulations-Anteils. Die Schmalbandigkeit des Halbleiterlasers wird durch die Modulation nicht verschlechtert, da sein Frequenzspektrum zum überwiegenden Teil optimal rückgekoppelt bleibt. Durch Modulationsfrequenzen im Hochfrequenzbereich (Radiofrequenzbereich) arbeitet der Sensor außerhalb des Basisbandes und jenseits des 1/f - Rauschens, wodurch größere Empfindlichkeiten erreicht werden.

Ein Ausführungsbeispiel derErfindung ist nachstehend unter Bezugnahme auf die zugehörigen Zeichnungen näher erläutert.

Fig. 1 ist eine schematische Darstellung eines mit Faseroptik und einem Ringresonator aufgebauten Sensors, der auf nichtreziproke Effekte wie den Sagnac-Effekt anspricht.

Fig.2 ist ein Diagramm und zeigt die Abhängigkeit der Frequenz eines optisch rückgekoppelten Systems in Abhängigkeit von der Frequenz des freilaufenden Systems, und zwar einmal ohne und einmal mit dem zu messenden nichtreziproken Effekt.

Fig.3 zeigt das Modulationsspektrum des optisch rückgekoppelten Halbleiterlasers in Beziehung zu dem Spektrum der Eigenresonanzen des Ringresonators.

Fig.4 zeigt die Transmission des Ringresonators und die Phase des ausgekoppelten Lichts in Abhängigkeit von der Frequenz für rechtsherum und linksherum laufendes Laserlicht bei Auftreten eines nichtreziproken Effektes.

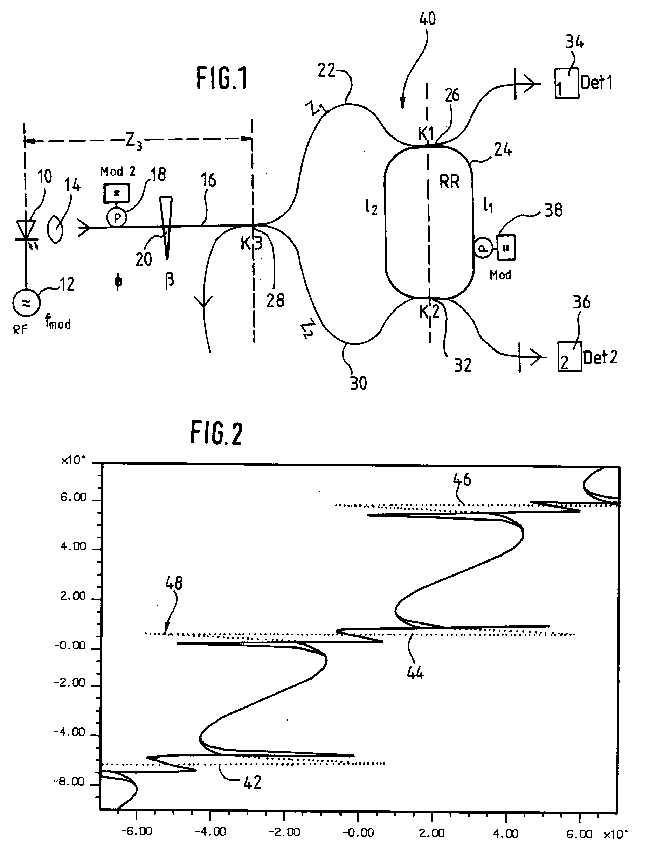

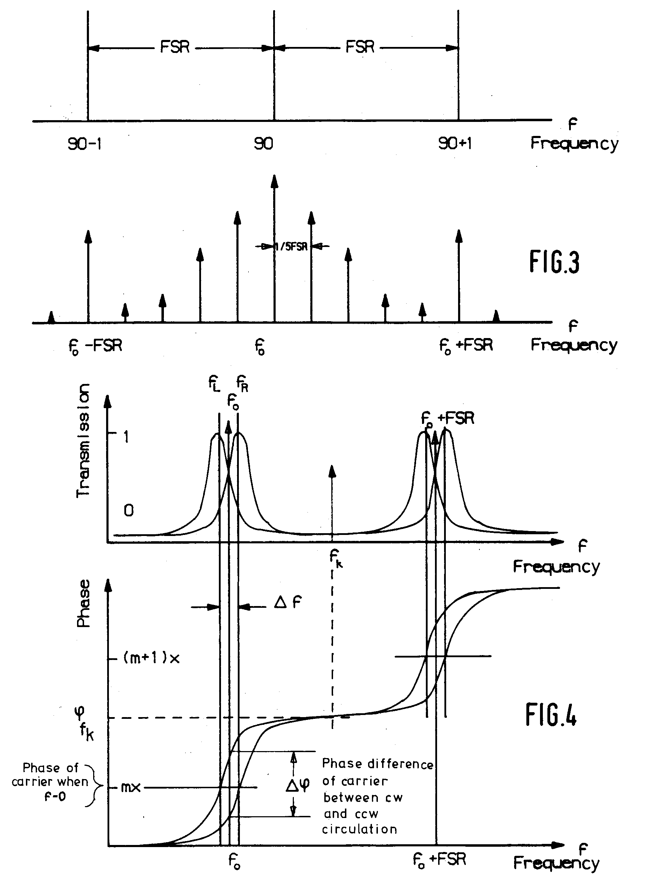

In Fig. 1 ist mit 10 ein Halbleiterlaser (Laserdiode) bezeichnet. Der Halbleiterlaser 10 ist über den Injektionsstrom mit einer Hochfrequenz $f_{mod}$ (Radiofrequenz) von einer Hochfrequenzquelle 12 frequenzmodulierbar. Das Laserlicht wird durch eine Optik 14 auf eine lichtleitende Faser 16 geleitet. Die lichtleitende Faser enthält ein Phasenstellglied 18 und ein Dämpfungsglied 20. Das Laserlicht in der Faser 16 wird einmal längs eines Weges 22 zu dem in Fig.1 "oberen" Teil eines Faserringes 24 geleitet. Durch einen Koppler 26 wird das Laserlicht im Uhrzeigersinn von Fig. 1 in den Faserring 24 eingekoppelt. Durch einen Koppler 28 wird ein Teil des in der Faser 16 geleiteten Laserlichtes in eine Faser 30 eingekoppelt. Dieses Laserlicht wird dann durch einen weiteren Koppler 32 an der dem Koppler 26 gegenüberliegenden Stelle entgegen dem Uhrzeigersinn von Fig.1 in den Faserring 24 eingekoppelt. Die Faser 22 führt weiter zu einem ersten photoelektrischen Detektor 34. Die Faser 30 führt weiter zu einem zweiten photoelektrischen Detektor 36. In dem einen Abschnitt des Faserringes 24 zwischen den Kopplern 26 und 32 ist ein weiteres Phasenstellglied 38 eingeschaltet.

Die Anordnung kann auch in integrierter Optik mit entsprechenden, in einem Substrat vorgesehenen Wellenleitern aufgebaut sein. Es ist auch möglich, die Anordnung mit voll reflektierenden und teildurchlässigen Spiegeln aufzubauen, ähnlich wie das in der DE-OS 37 12 815 dargestellt ist.

Die lichtleitenden Fasern bilden einen externen Ringresonator 40. Der Halbleiterlaser 10 wird mit dem Ringresonator 40 in optischer Rückkopplung betrieben. Ein Teil des Laserlichtes, das von dem Halbleiterlaser 10 ausgesandt wird, wird nach Durchlaufen des Ringresonators 40 zeitverzögert in den Halbleiterlaser 10 zurückgeleitet. Der Halbleiterlaser 10 ist aus diesem Grund gegenüber dem Ringresonator 40 nicht durch eine "optische Diode" isoliert, wie dies bei den meisten Systemen mit passivem Ringresonator der Fall ist. Für einen solchen Betriebszustand lassen sich Arbeitspunkte finden, in denen der Halbleiterlaser 10 stabil auf einer einzigen Frequenz $f_o$ arbeitet. Diese Arbeitspunkte sind bestimmt durch die Transmissionsfrequenz und Güte des externen Ringresonators, die Amplitude und Phasenlage der optischen Rückkopplung, der Kennlinie Stom-gegen-Leistung bzw. Strom-gegen-Wellenlänge des nicht-rückgekoppelten Halbleiterlasers 10 sowie durch ein bestimmtes Verhältnis der Längen $Z_1$, $Z_2$ und $Z_3$ der Zuführwellenleiter und der Teillängen $l_1$ und $l_2$ der Teillängen des Faserringes 24. Für kleine Rückkoppelamplituden ergeben sich Stabilitätsbereiche des Halbleiterlasers 10 in Form von "Plateaus" 42, 44, 46 in einem in Fig.2 punktiert dargestellten Diagramm 48.

Bei der Messung nichtreziproker Effekte, z.B. bei der Messung von Drehraten mittels des Sagnac-Effektes, wie das in der DE-OS 37 12 815 beschrieben ist, muß die Frequenz des Halbleiterlasers 10 relativ zu einer Resonanzfrequenz des Ringresonators 40 moduliert werden. Die optische Rückkopplung wirkt der Modulierbarkeit des Halbleiterlasers 10 jedoch entgegen. Die optische Rückkopplung sucht den Laser auf einer Resonanzfrequenz des Ringresonators 40 zu stabilisieren. Insbesondere im Bereich niedriger Frequenzen ergibt sich daher eine Verringerung der Steilheit der Frequenzmodulations-Kennlinie.

Es hat sich nun gezeigt, daß die Steilheit der Frequenzmodulations-Kennlinie zunimmt, wenn die Modulationsfrequenz $f_{mod}$ in einem rationalen Verhältnis zum freien Spektralabstand FSR des Ringresonators steht, also dem Abstand zwischen der Grundresonanz $q_o$ des Ringresonators und der benachbarten Eigenresonanzen. Es ist dann

$$f_{mod} = j/k * FSR,$$

wobei j und k ganze Zahlen sind. Das ist daran erkennbar, daß die von dem Ringresonator transmittierte Lichtintensität resonanzartig anwächst.

Normalerweise würde bei Modulation eines Halbleiterlasers mit optischer Rückkopplung von einem Ringresonator der Halbleiterlaser im wesentlichen nur Licht mit einer Frequenz aussenden, die der Resonanzfrequenz $q_o$ des Ringresonators entspricht. Bei dem Versuch der Frequenzmodulation durch direkte Ansteuerung des Halbleiterlasers ergäben sich nur sehr schwache Seitenbänder. Das entspricht einer schwachen Frequenzmodulstion. Wenn nun nicht nur die Trägerfrequenz $f_o$ sondern auch wenigstens eines der Seitenbänder mit einer Resonanzstelle des Ringresonators in Resonanz ist, dann wirkt sich das auch auf die zwischen Trägerfrequenz und in Resonanz befindlichem Seitenband liegenden Seitenbänder aus. Diese Seitenbänder treten im Spektrum ebenfalls stärker in Erscheinung. Das ist im unteren Teil von Fig.3 dargestellt. Im oberen Teil von Fig.3 sind die Resonanzstellen $q_o$ sowie $q_{o-1}$ und $q_{o+1}$ des Ringresonators dargestellt. Die Resonanzstellen $q_{o-1}$ und $q_{o+1}$ liegen in einem Abstand FSR, dem freien Spektralabstand von der Resonanzstelle $q_o$.

Der Halbleiterlaser 10 ist nun so angesteuert und moduliert, daß die Trägerfrequenz $f_o$ mit der Resonanzstelle $q_o$ zusammenfällt und gleichzeitig die fünften Seitenbänder auf jeder Seite der Trägerfrequenz mit den Resonanzstellen $q_{o-1}$ und $q_{o+1}$ des Ringresonators 40 zusammenfällt. Man erkennt, daß durch die Resonanzen nicht nur die fünften Seitenbänder sondern auch die dazwischenliegenden Seitenbänder stärker werden. Das bedeutet aber eine gegenüber dem Normalfall eines optisch rückgekoppelten Halbleiterlasers verbesserte Modulierbarkeit. Die Stabilisierung der Laserfrequenz bleibt dabei erhalten.

Allgemein kann das k-te Seitenband mit der j-ten Resonanzstelle des Ringresonators 40 zusammenfallen, um einen solchen Effekt zu erzielen. Für einen Ringresonator gilt

$$f_{mod} = j/k * c/(l_1 + l_2),$$

wobei $l_1$ und $l_2$ die optischen Weglängen des Faserringes 24 zwischen den Kopplern 26 und 32 "rechtsherum" bzw. "linksherum" sind.

Zur Messung des nichtreziproken Effektes, z.B. zur Messung der Drehrate mittels des Sagnac-Effektes, werden die Trägerfrequenz und wenigstens eines der Seitenbänder in Resonanz mit dem Ringresonator gebracht. Von dem Licht, das ausgehend von dem Halbleiterlaser 10 (Fig. 1) über die Fasern 16 und 22 zu dem Detektor 34 gelangt bzw. über die Fasern 16 und 30 zu dem Detektor 36 werden die Resonanzfrequenz $q_o$ des Ringresonators und die resonanten Seitenbänder $q_{o-1}$ und $q_{o+1}$ von dem Ringresonator 40 besonders stark auf den Ringresonator 40 geleitet. Die übrigen Frequenzen gelangen nahezu ungestört zu den Detektoren 34 und 36. Ein Regelkreis sorgt dafür, daß die Trägerfrequenz $f_o$ und die Seitenbänder $f_o$ +/- j FSR genau in den "Resonanztälern" (dips) liegen.

Bei Auftreten eines nichtreziproken Effektes im Ringresonator 40 spalten sich die Resonanzfunktionen des Ringresonators 40 für gegensinnige Umläufe des Laserlichtes auf. Das ist in Fig.4 dargestellt. Die Aufspaltung $\Delta$ f ist dem nichtreziproken Effekt proportional. Für den Sagnac-Effekt gilt:

$$\Delta \ell = \frac{4\,A}{\lambda\,(\ell_1 + \ell_2)} \cdot \Omega$$

Die Maxima der Transmission des Ringresonators 40 liegen bei verschobenen Frequenzen $f_L$ bzw. $f_R$. Mit der Amplitudenverschiebung geht auch eine Phasenverschiebung einher, wie im unteren Teil von Fig.4 dargestellt ist. Zwischen dem rechtsherum laufenden Laserlicht und dem linksherum laufenden Laserlicht tritt im Bereich der Resonanzen eine Phasendifferenz $\Delta\phi$ auf. Für nicht im Bereich der Resonanz liegende Frequenzen, beispielsweise die Frequenz $f_k$ in Fig.4 ergibt sich dagegen keine Phasendifferenz zwischen dem rechtsherum und linksherum in den Ringresonator 40 umlaufenden Licht.

Bildet man die Differenz der Signale der Detektoren 34 und 36 und moduliert man die Frequenz des Laserlichts wie beschrieben, dann ergibt sich eine Komponente des Signals mit der Modulationsfrequenz. Diese Komponente ist ein Maß für den zu messenden nichtreziproken Effekt, also z.B. für die Veränderung der optischen Weglängen durch den Sagnac-Effekt bei einer Drehrate um eine zur Ebene des Faserringes senkrechte Achse.

Zur Erzielung einer definiert schwachen Rückkopplung, kann eine nicht-entspiegelte Laserdiode benutzt werden. Es kann auch ein Dämpfungsglied 20 in Form einer "optischen Diode" vorgesehen sein. Dabei sind die Anforderungen an die Isolation einer solchen optischen Diode deutlich geringer als z.B. in der Nachrichtentechnik. Eine Isolation von 20 dB (Roundtripwert) ist ein für die vorliegenden Zwecke brauchbarer Wert.

**Patentansprüche**

1. Sensor für eine Meßgröße, mit den folgenden Merkmalen:

(a) einem optischen Ringresonator mit einem ersten und einem zweiten Umlaufsinn des Lichtes, wobei die optischen Weglängen des Ringresonators für den ersten und den zweiten Umlaufsinn des Lichts in dem Ringresonator durch einen nichtreziproken Effekt in Abhängigkeit von der Meßgröße unterschiedlich verändert werden,

(b) einen Halbleiterlaser, der mit dem Ringresonator zur Erzeugung einer mit dem ersten Umlaufsinn umlaufenden Lichtwelle und einer mit dem zweiten Umlaufsinn umlaufenden Lichtwelle gekoppelt ist, wobei der Ringresonator einen Teil des Resonanzhohlraumes des Halbleiterlasers bildet,

(c) Mittel zur Modulation der Frequenz des Halbleiterlasers durch unmittelbare Ansteuerung des Halbleiterlasers, derart, daß Seitenbänder der frequenzmodulierten Laserlichtwelle mit dem Ringresonator in Resonanz sind, und

(d) eine Detektoreinrichtung, welche auf die Unterschiede der mit dem ersten und dem zweiten Umlaufsinn umlaufenden Lichtwellen anspricht zur Erzeugung eines die besagte Meßgröße wiedergebenden Signals.

**FIG.1**

**FIG.2**

FIG.3

FIG.4